# EUROPEAN PATENT APPLICATION

(11) **EP 4 181 554 A1**
(43) Date of publication of application: **17.05.2023**
(21) Application number: 21211415.1
(22) Date of filing: 30.11.2021
(51) Int. Cl.: H04W 12/12, H04L 9/40

(54) **TRAFFIC CONTROL SERVER AND METHOD**

(30) Priority: 10.11.2021 TW 110141774
(71) Applicant: Institute for Information Industry, Taipei 106 (TW)
(72) Inventor: HUANG, PO CHING, TAIPEI CITY (TW); HUANG, KUAN LUNG, TAIPEI CITY (TW); CHU, YU FENG, TAIPEI CITY (TW); MAO, Ching Hao, TAIPEI CITY (TW); HSU, CHIH PENG, TAIPEI CITY (TW)
(74) Representative: dompatent von Kreisler Selting Werner - Partnerschaft von Patent- und Rechtsanwälten mbB

(57) **Abstract**

A traffic control method, adapted to a server (SVR), includes detecting a packet (PI, P2, P3) sent by user equipment (UE1, UE2, UE3) and transmitted through a base station (gNB) to obtain packet information of the packet (PI, P2, P3), wherein the packet information comprises an Internet protocol address, determining whether the packet information is abnormal, tagging identification information corresponding to the Internet protocol address when the packet information is abnormal, and blocking a connection between the user equipment (UE1, UE2, UE3) and a network (NET) based on the identification information.

## Description

### CROSS-REFERENCE TO RELATED APPLICATIONS

This non-provisional application claims priority under 35 U.S.C. § 119(a) on Patent Application No(s). 110141774 filed in Republic of China (ROC) on November 10th, 2021, the entire contents of which are hereby incorporated by reference.

### BACKGROUND

### 1. Technical Field

This disclosure relates to a traffic control server and method, especially to a traffic control server and method for suppressing abnormal traffic.

### 2. Related Art

Currently, the field of network transmission lacks a central network node that serves to control the data transmission of networks. Therefore, even if a network attack such as distributed denial-of-service (DDoS) attack is detected coming from user equipment, it is still difficult to directly deny the connection between the user equipment and the network. Among the existing approaches for securing information safety, they mostly filter the output information of the network by establishing firewalls to avoid the user equipment attacking an external network, server, etc. connected to the network. However, this approach may only block the attacks at the back end, and is unable to reduce the traffic from the base station to said network.

### SUMMARY

Accordingly, this disclosure provides a traffic control server and method.

According to one or more embodiment of this disclosure, a traffic control method, adapted to a server (SVR), includes detecting a packet (PI, P2, P3) sent by user equipment (UE1, UE2, UE3) and transmitted through a base station (gNB) to obtain packet information of the packet (PI, P2, P3), wherein the packet information includes an Internet protocol address; determining whether the packet information is abnormal; tagging identification information corresponding to the Internet protocol address when the packet information is abnormal; and blocking a connection between the user equipment (UE1, UE2, UE3) and a network (NET) based on the identification information.

According to one or more embodiment of this disclosure, a traffic control server (SVR) includes: at least one processing module configured to: detect a packet (PI, P2, P3) sent by user equipment (UE1, UE2, UE3) and transmitted through a base station (gNB) to obtain packet information of the packet (PI, P2, P3), wherein the packet information includes an Internet protocol address; determine whether the packet information is abnormal; tag identification information corresponding to the Internet protocol address when the packet information is abnormal; and block a connection between the user equipment (UE1, UE2, UE3) and a network (NET) based on the identification information.

In view of the above description, the traffic control method and server according to one or more embodiments of the present disclosure may use the components of the 5G core network to block malicious attacks from the user equipment as quickly as possible. Further, according to one or more embodiments of the traffic control method and server of the present disclosure, by blocking the packet sent by the user equipment at the core network end from entering the network end, the traffic from the base station to the network end generated from attacks may be reduced. In addition, since the present disclosure may determine whether the user equipment is attacking by comparing the Internet protocol address and calculating the number of times the user equipment sending packets, DDoS type of attacks may be detained, such as packet traffic congestion and network resources consumption. The present disclosure detects the packets by port mirroring, so that the packet transmission between the base station and the user plane function component may be detected without being affected.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is a structural diagram illustrating a traffic control system of the present disclosure; and
FIG. 2 is a flow chart illustrating a traffic control method according to an embodiment of the present disclosure.

### DETAILED DESCRIPTION

In the following detailed description, for purposes of explanation, numerous specific details are set forth in order to provide a thorough understanding of the disclosed embodiments. According to the description, claims and the drawings disclosed in the specification, one skilled in the art may easily understand the concepts and features of the present invention. The following embodiments further illustrate various aspects of the present invention, but are not meant to limit the scope of the present invention.

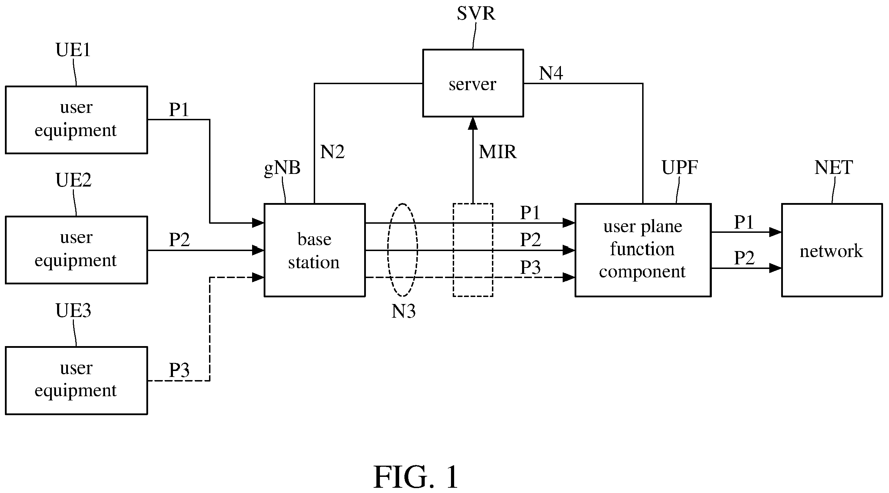

Please refer to FIG. 1. FIG. 1 is a structural diagram illustrating a traffic control system of the present disclosure. As shown in FIG. 1, first user equipment (UE) UE1, second user equipment UE2, and third user equipment UE3 are in communication connection with a base station gNB. In some embodiments, the base station gNB receives the first to third packet information of uplink packets transmitted by the user equipment UE1-UE3. A traffic control server SVR (will be referred to as "server SVR" herein) is in communication connection with the base station gNB and user plane function (UPF) component.

In FIG. 1, the user equipment UE1-UE3 may be a smartphone, a tablet computer or any other mobile devices. The packet information of the packet P1 sent by the first user equipment UE1 is referred to as the first packet information; the packet information of the packet P2 sent by the second user equipment UE2 is referred to as the second packet information; and the packet information of the packet P3 sent by the third user equipment UE3 is referred to as the third packet information. In some embodiments, when the base station gNB transmits the uplink packets P1-P3 of the user equipment UE1-UE3 to the user plane function component UPF, the uplink packets P1-P3 are port mirrored by the server SVR to generate mirrored packets MIR. The server SVR uses the generated mirrored packets MIR to identify if any abnormal traffic exists in the network. In some embodiments, each of the pieces of the first to third packet information includes a number of packets sent by a respective one of the pieces of the user equipment UE1-UE3, size of the packets sent by a respective one of the pieces of the user equipment UE1-UE3 in a predetermined period and an Internet protocol (IP) address of each of the pieces of the user equipment UE1-UE3, etc. Said predetermined period is a duration of the server SVR performing one port mirroring on the packets P1-P3, wherein the predetermined period may be 10 seconds, 1 minute, 20 minutes, etc., the present disclosure does not limit the duration of the predetermined period. It should be noted that the number of pieces of the the user equipment is exemplarily shown in FIG. 1, and the present disclosure does not limit the number of pieces of the user equipment. It is worth noting that, the mirrored packets MIR received by the server SVR are packet copies of the packets P1-P3 sent by the user equipment UE1-UE3. Therefore, the mirrored packets MIR also include the packet information described above.

In some embodiments, the server SVR may be a server of 5G core network (5GC) (5th Generation Mobile Network; 5th Generation Wireless System). The server SVR may also be another server independent from but in communication with the server of the 5G core network through an application programming interface (API).

In some embodiments, the server SVR may be a server for traffic control, which includes at least one processing module (not shown in FIG. 1), and is configured to perform the traffic control method of the present disclosure. The processing module may be a processor in the server SVR, or an application runs on the server SVR.

In some other embodiments, the server SVR includes at least one processing module and a plurality of 5G network function components (not shown in FIG. 1), and the at least one processing module is electrically connected to or in communication connection with at least one of the 5G network function components. These 5G network function components interact with each other through communication protocols. The 5G network function components, may be, for example, an access and mobility function (AMF) component, a unified data management (UMD) component, a policy control function (PCF) component and a session management function (SMF) component. In some embodiments, the base station gNB communicates with the AMF component of the server SVR through N2 interface of 5G mobile standard. The user plane function component UPF communicates with the SMF component of the server SVR through N4 interface of 5G mobile standard.

As shown in FIG. 1, the server SVR is connected to the base station gNB, wherein the base station gNB supports the 5G core network. The base station gNB is configured to transmit the packets P1-P3 sent by the user equipment UE1-UE3. The base station gNB then transmits the packets P1-P3 to the user plane function component UPF, wherein the user plane function component UPF is for determining which packet(s) sent by the user equipment is allowed to enter the network NET, and which packet(s) sent by the user equipment to be blocked.

In short, the user equipment UE1-UE3 sends packets P1-P3 to the base station gNB, the base station gNB then sends the packets P1-P3 to the user plane function component UPF, and the mirrored packets MIR obtained by copying the packets P1-P3 are transmitted to the server SVR. In the present disclosure, the server SVR determines whether one or more of pieces of the the user equipment UE1-UE3 attempts to attack the network NET based on the packets P1-P3 (the mirrored packets MIR) of the user equipment UE1-UE3 transmitted from the base station gNB. When it is determined that certain user equipment attempts to attack the network NET, the server SVR notifies the user plane function component UPF to block the packets sent by said certain user equipment. That is, the server SVR notifies the user plane function component UPF to block the traffic sourced from said certain user equipment between the user plane function component UPF and the network NET.

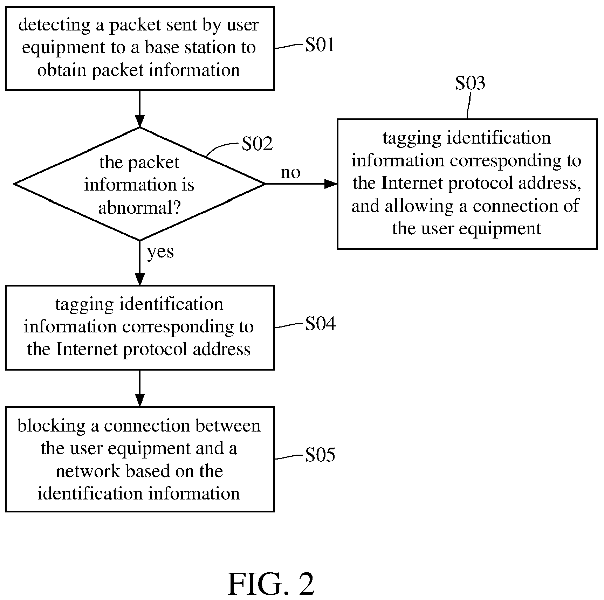

To describe the traffic control server and method of the present disclosure in more detail, please refer to FIGs. 1 and 2, wherein FIG. 2 is a flow chart illustrating a traffic control method according to an embodiment of the present disclosure, and the traffic control server and method of the present disclosure is for suppressing abnormal traffic caused by improper or malicious attacks.

In step S01, the server SVR detects packets P1-P3 transmitted from the base station gNB to the user plane function component UPF to obtain the first to third packet information of the packets P1-P3, wherein the packets P1-P3 are sent by the user equipment UE1-UE3 and transmitted through the base station gNB, wherein the packet information includes an Internet protocol address of the user equipment.

In step S01, the server SVR detects the packets P1-P3 transmitted from the base station gNB to the user plane function component UPF using packet parser/software to, by port mirror, obtain the packet information (the mirrored packets MIR).

Since the base station gNB transmits the packets P1-P3 outputted by the user equipment UE1-UE3 to the user plane function component UPF, and each of the packets P1-P3 sent by the user equipment UE1-UE3 includes tunnel ID of GPRS Tunnelling Protocol (GTP) representing the user equipment, the server SVR may use the tunnel ID to obtain mapped Internet protocol address of the user equipment UE1-UE3. Therefore, the server SVR, by detecting the packets P1-P3 transmitted by the base station gNB, may determine the first packet information of the first user equipment UE1, the second packet information of the second user equipment UE2, and the third packet information of the third user equipment UE3.

In other words, the base station gNB may adopt (be connected to) the 5G core network, and the server SVR detects N3 interface of the base station gNB. By using port mirroring method to detect the packets P1-P3 to obtain the packet information, the server SVR is able to detect the traffic between the base station gNB and the user plane function component UPF without affecting packet transmission therebetween. In addition, the server SVR may also obtain the operation log of the base station gNB to fetch the packet information from the log.

In step S02, the server SVR determines whether the packet information is abnormal.

In this step, the server SVR determines whether each one of the pieces of the first to third packet information is abnormal, thereby determining if any one of the pieces of the user equipment UE1-UE3 is launching an attack. In other words, the server SVR may check the packet transmission performed by the user equipment UE1-UE3 according to the Internet protocol or an identifiable malicious behavior.

For example, the implementation of step S02 includes, by the server SVR, determining whether the Internet protocol addresses of the first to third packet information are authorized Internet protocol addresses. Specifically, either one of the pieces of the user equipment UE1-UE3 has to be equipment authorized by the carrier of the base station gNB for transmitting packets P1-P3 through the base station gNB, wherein authorized user equipment is given an authorized Internet protocol address. Therefore, the server SVR may store authorized Internet protocol addresses of respective authorized user equipment corresponding to the base station gNB, or the server SVR may obtain authorized Internet protocol addresses of respective authorized user equipment corresponding to the base station gNB at any time, for the server SVR to determine if the user equipment is allowed to use the base station gNB to transmit packets. In step S02, the server SVR compares the Internet protocol addresses of the user equipment UE1-UE3 with said authorized Internet protocol addresses, to determine whether the Internet protocol addresses of the user equipment UE1-UE3 are authorized Internet protocol addresses. When the server SVR determines that the Internet protocol addresses of the user equipment UE1-UE3 all are authorized Internet protocol addresses, the server SVR determines that the first to third packet information is not abnormal.

The implementation of step S02 may also include determining whether a number of times of each piece of user equipment UE1-UE3 sending the packets P1-P3 reaches a warning number by the server SVR, wherein the warning number is the maximum number of times of each piece of the user equipment is allowed to send packets P1-P3 in a predetermined period. The server SVR determines whether the number of times of each piece of user equipment UE1-UE3 sending the packets P1-P3 reaches the warning number to determine whether each piece of user equipment UE1-UE3 is sending a large number of packets in a short period of time, and that the number of times each piece of the user equipment UE1-UE3 sending the packets P1-P3 in said short period of time reaches the maximum number. When the server SVR determines that the number of times each piece of the user equipment UE1-UE3 sending the packets P1-P3 does not reach the warning number, the server SVR determines that the first to third packet information is not abnormal.

Moreover, the implementation of step S02 may further include determining whether the flow of the first to third packet information reaches a warning flow by the server SVR, wherein the warning flow is the maximum traffic of user equipment allowed to send packets in a predetermined period. That is, the warning flow is the maximum size of the sum of the packets allowed in the predetermined period. The first to third packet information may include the sum of sizes of packets P1-P3 sent by the user equipment UE1-UE3 in the predetermined period. Therefore, the server SVR may further calculate the traffic of each piece of the user equipment UE1-UE3 in the predetermined period. For example, the warning flow may be 700 GB per second, and in step S02, the server SVR determines whether the flow in each piece of the first to third packet information reaches 700 GB per second. When the server SVR determines that the traffic created by the user equipment in the predetermined period does not reach the warning flow, the server SVR determines that the packet information is not abnormal.

Furthermore, if the server SVR obtains the operation log of the base station gNB, and the log does not contain information related to alerts of the user equipment UE1-UE3, the server SVR may then determine the first to third packet information is not abnormal.

When determining the first to third packet information is not abnormal, the server SVR may then perform step S03 to tag identification information corresponding to the Internet protocol address, and allow the user equipment to connect to a network (for example, the network NET shown in FIG. 1). The identification information may include International Mobile Subscriber Identity (IMSI) and Packet Data Unit (PDU) Session. The detailed implementation of step S03 will be described below along with steps S04 and S05. Further, the following description will be made based on the assumption that the server SVR determines that the first packet information and the second packet information of the first user equipment UE1 and the second user equipment UE2 is not abnormal (shown as solid lines in FIG. 1), and the third packet information of the third user equipment UE3 is abnormal (shown as dash line in FIG. 1).

If the third packet information is determined to be abnormal in step S02, the server then tags the identification information corresponding to the Internet protocol address of the third user equipment UE3 in step S04, wherein the identification information may include IMSI and PDU session.

Before performing steps S03 and S04, the server SVR obtains IMSI and PDU session of the user equipment UE1-UE3 according to Internet protocol addresses of the first to third packet information, and uses the IMSI and PDU session of the user equipment UE1-UE3 as the identification information. Specifically, if the server SVR is the server of 5G core network, the server SVR itself may store the corresponding relationships between Internet protocol address, IMSI and PDU session; if the server SVR is another server communicates with the server of 5G core network through API, the server SVR may access IMSI and PDU session stored in the server of 5G core network through API.

The server SVR may correspondingly record IMSI and PDU session of the user equipment UE1-UE3 in steps S03 and S04 after obtaining the identification information of user equipment UE1-UE3. The server SVR may further allow the first user equipment UE1 and the second user equipment UE2 to connect to the network NET in step S03.

In detail, the server of 5G core network has Session Management Function (SMF) component and Policy Control function (PCF) component, wherein SMF component may record the identification information of the three user equipment to the PCF component (for example, store the identification information in an identification information table). The difference between steps S03 and S04 is that, in step S03, the server SVR tags IMSI and PDU session of the user equipment UE1 and UE2 stored in PCF component as "connection allowed"; and in step S04, the server SVR tags IMSI and PDU session of the third user equipment UE3 stored in PCF component as "connection not allowed". Specifically, if the server SVR is the server of 5G core network, SMF component of the server SVR may tag the identification information with "connection allowed" or "connection not allowed" when recording the identification information into PCF component; if the server SVR is another server communicates with the server of 5G core network through API, the server SVR may record the tags of "connection allowed" or "connection not allowed" into PCF component of the server of 5G core network.

It should be noted that, tags "connection allowed" and "connection not allowed" are merely examples, the present disclosure does not limit how the server SVR tags the identification information of normal/abnormal user equipment.

Subsequently, SMF component of the server SVR (or the server of 5G core network) reads the tagged identification information from PCF component, and transmits the tagged identification information to the user plane function component UPF. Therefore, based on the tags of the identification information, the user plane function component UPF may determine whether packet transmission of each piece of the user equipment UE1 -UE3 should be allowed.

Since the identification information of the first user equipment UE1 and the second user equipment UE2 is tagged with "connection allowed" (step S03 of FIG. 2), the user plane function component UPF may allow the first user equipment UE1 and the second user equipment UE2 to connect to the network NET based on the tags. Therefore, the packets P1 and P2 sent by the first user equipment UE1 and the second user equipment UE2 may be released to the network NET. On the other hand, since the identification information of the third user equipment UE3 is tagged with "connection not allowed" (step S04 of FIG. 2), the user plane function component UPF may block the connection between the third user equipment UE3 and the network NET in step S05 based on the tag.

The implementation of step S05 may include blocking a connection between a data network and the user equipment (third user equipment UE3) corresponding to the identification information tagged with "connection not allowed". The network NET may be a data network of 5G core network, and the server SVR may block the malicious third user equipment UE3 from connecting to the Internet by blocking the connection between the third user equipment UE3 and the data network.

Further, the network NET may be an external network adapted for the user equipment to connect through a data network, and the implementation of step S05 may also include blocking the user equipment (third user equipment UE3) corresponding to the identification information tagged with "connection not allowed" from connecting to the external network NET via the data network. The external network NET may be a social network website, a government website, a news website, etc., the present disclosure does not limit the type of said external network. That is, in this implementation, the server SVR may notify the user plane function component UPF (by tagging the identification information of the third user equipment UE3), for the user plane function component UPF to block the packet P3 of the third user equipment UE3 from being transmitted from the data network to the external network. Accordingly, the malicious third user equipment UE3 is unable to connect to certain website through the base station gNB.

In view of the above description, the traffic control method and server according to one or more embodiments of the present disclosure may use the components of the 5G core network to block malicious attacks from user equipment as quickly as possible. Further, according to one or more embodiments of the traffic control method and server of the present disclosure, by blocking the packet sent by the user equipment at core network end from entering the network end, the traffic from the base station to the network end generated from attacks may be reduced. In addition, since the present disclosure may determine whether the user equipment is attacking by comparing the Internet protocol address and calculating the number of times the user equipment sending packets, DDoS type of attacks may be detained, such as packet traffic congestion and network resources consumption. The present disclosure detects the packets by port mirroring, so that the packet transmission between the base station and the user plane function component may be detected without being affected.

## Claims

1. A traffic control method, adapted to a server (SVR), comprising:
detecting a packet (PI, P2, P3) sent by user equipment (UE1, UE2, UE3) and transmitted through a base station (gNB) to obtain packet information of the packet (PI, P2, P3), wherein the packet information comprises an Internet protocol address;
determining whether the packet information is abnormal;
tagging identification information corresponding to the Internet protocol address when the packet information is abnormal; and
blocking a connection between the user equipment (UE1, UE2, UE3) and a network (NET) based on the identification information.

2. The traffic control method according to claim 1, wherein before tagging the identification information, the method further comprises:
obtaining an international mobile subscriber identity and a packet data unit session according to the Internet protocol address of the user equipment (UE1, UE2, UE3); and
using the international mobile subscriber identity and the packet data unit session as the identification information.

3. The traffic control method according to claim 1, wherein the network (NET) is a data network, and blocking the connection between the network (NET) and the user equipment (UE1, UE2, UE3) corresponding to the identification information comprises:
denying a connection between the data network (NET) and the user equipment (UE1, UE2, UE3) corresponding to the identification information.

4. The traffic control method according to claim 1, wherein the network (NET) is an external network adapted for the user equipment to connect through a data network, and blocking the connection between the network (NET) and the user equipment (UE1, UE2, UE3) corresponding to the identification information comprises:
blocking the packet (PI, P2, P3) from being transmitted from the data network to the external network (NET).

5. The traffic control method according to claim 1, wherein the base station (gNB) uses a 5G core network, and detecting the packet (PI, P2, P3) transmitted by user equipment (UE1, UE2, UE3) to the base station (gNB) to obtain the packet information comprises:
mirroring an N3 interface of the base station (gNB) to obtain the packet information.

6. The traffic control method according to any one of claims 1 to 5, wherein determining whether the packet information is abnormal comprises:
determining whether the Internet protocol address is an unauthorized Internet protocol address.

7. The traffic control method according to any one of claims 1 to 5, wherein the packet information comprises a number of times the user equipment (UE1, UE2, UE3) sending the packet (PI, P2, P3), and determining whether the packet information is abnormal comprises:
determining whether the number of times the user equipment (UE1, UE2, UE3) sending the packet (PI, P2, P3) reaches a warning number.

8. A traffic control server (SVR), comprising:
at least one processing module configured to:
detect a packet (PI, P2, P3) sent by user equipment (UE1, UE2, UE3) and transmitted through a base station (gNB) to obtain packet information of the packet (P1, P2, P3), wherein the packet information comprises an Internet protocol address;
determine whether the packet information is abnormal;
tag identification information corresponding to the Internet protocol address when the packet information is abnormal; and
block a connection between the user equipment (UE1, UE2, UE3) and a network (NET) based on the identification information.

9. The traffic control server (SVR) according to claim 8, wherein the at least one processing module is further configured to:
obtain an international mobile subscriber identity and a packet data unit session according to the Internet protocol address of the user equipment (UE1, UE2, UE3) before tagging the identification information; and
use the international mobile subscriber identity and the packet data unit session as the identification information.

10. The traffic control server (SVR) according to claim 8, wherein the network (NET) is a data network, and the at least one processing module is further configured to:
deny a connection between the data network (NET) and the user equipment (UE1, UE2, UE3) corresponding to the identification information.

11. The traffic control server (SVR) according to claim 8, wherein the network (NET) is an external network adapted for the user equipment (UE1, UE2, UE3) to connect through a data network, and the at least one processing module is further configured to:
blocking the packet (PI, P2, P3) from being transmitted from the data network to the external network (NET).

12. The traffic control server (SVR) according to claim 8, wherein the base station (gNB) uses a 5G core network, and the at least one processing module is further configured to mirror an N3 interface of the base station (gNB) to obtain the packet information.

13. The traffic control server (SVR) according to any one of claims 8 to 12, wherein the at least one processing module is further configured to determine whether the Internet protocol address is an unauthorized Internet protocol address to determine whether the packet information is abnormal.

14. The traffic control server (SVR) according to any one of claims 8 to 12, wherein the packet information comprises a number of times the user equipment (UE1, UE2, UE3) sending the packet (PI, P2, P3), and the at least one processing module is further configured to determine whether the number of times the user equipment (UE1, UE2, UE3) sending the packet (PI, P2, P3) reaches a warning number to determine whether the packet information is abnormal.

## Amended claims

### Amended claims in accordance with Rule 137(2) EPC.

1. A traffic control method, adapted to a server (SVR), comprising:
detecting a packet (P1, P2, P3) sent by user equipment (UE1, LTE2, LTE3) and transmitted through a base station (gNB) to obtain packet information of the packet (P1, P2, P3), wherein the packet information comprises an Internet protocol address;
determining whether the packet information is abnormal;
tagging identification information corresponding to the Internet protocol address when the packet information is abnormal, wherein the identification information includes international mobile subscriber identity and packet data unit session; and
blocking a connection between the user equipment (UE1, LTE2, LTE3) and a network (NET) based on the identification information.

2. The traffic control method according to claim 1, wherein before tagging the identification information, the method further comprises:
obtaining the international mobile subscriber identity and the packet data unit session according to the Internet protocol address of the user equipment (UE1, UE2, LTE3); and
using the international mobile subscriber identity and the packet data unit session as the identification information.

3. The traffic control method according to claim 1, wherein the network (NET) is a data network, and blocking the connection between the network (NET) and the user equipment (UE1, LTE2, LTE3) corresponding to the identification information comprises:
denying a connection between the data network (NET) and the user equipment (UE1, LTE2, LTE3) corresponding to the identification information.

4. The traffic control method according to claim 1, wherein the network (NET) is an external network adapted for the user equipment to connect through a data network, and blocking the connection between the network (NET) and the user equipment (UE1, LTE2, LTE3) corresponding to the identification information comprises:
blocking the packet (P1, P2, P3) from being transmitted from the data network to the external network (NET).

5. The traffic control method according to claim 1, wherein the base station (gNB) uses a 5G core network, and detecting the packet (P1, P2, P3) transmitted by user equipment (UE1, UE2, UE3) to the base station (gNB) to obtain the packet information comprises:
mirroring an N3 interface of the base station (gNB) to obtain the packet information.

6. The traffic control method according to any one of claims 1 to 5, wherein determining whether the packet information is abnormal comprises:
determining whether the Internet protocol address is an unauthorized Internet protocol address.

7. The traffic control method according to any one of claims 1 to 5, wherein the packet information comprises a number of times the user equipment (UE1, LTE2, UE3) sending the packet (P1, P2, P3), and determining whether the packet information is abnormal comprises:
determining whether the number of times the user equipment (UE1, LTE2, LTE3) sending the packet (P1, P2, P3) reaches a warning number.

8. A traffic control server (SVR), comprising:
at least one processing module configured to:
detect a packet (P1, P2, P3) sent by user equipment (UE1, LTE2, LTE3) and transmitted through a base station (gNB) to obtain packet information of the packet (P1, P2, P3), wherein the packet information comprises an Internet protocol address;
determine whether the packet information is abnormal;
tag identification information corresponding to the Internet protocol address when the packet information is abnormal, wherein the identification information includes international mobile subscriber identity and packet data unit session; and
block a connection between the user equipment (UE1, LTE2, LTE3) and a network (NET) based on the identification information.

9. The traffic control server (SVR) according to claim 8, wherein the at least one processing module is further configured to:
obtain the international mobile subscriber identity and the packet data unit session according to the Internet protocol address of the user equipment (UE1, LTE2, LTE3) before tagging the identification information; and
use the international mobile subscriber identity and the packet data unit session as the identification information.

10. The traffic control server (SVR) according to claim 8, wherein the network (NET) is a data network, and the at least one processing module is further configured to:
deny a connection between the data network (NET) and the user equipment (UE1, LTE2, LTE3) corresponding to the identification information.

11. The traffic control server (SVR) according to claim 8, wherein the network (NET) is an external network adapted for the user equipment (UE1, UE2, LTE3) to connect through a data network, and the at least one processing module is further configured to:
blocking the packet (P1, P2, P3) from being transmitted from the data network to the external network (NET).

12. The traffic control server (SVR) according to claim 8, wherein the base station (gNB) uses a 5G core network, and the at least one processing module is further configured to mirror an N3 interface of the base station (gNB) to obtain the packet information.

13. The traffic control server (SVR) according to any one of claims 8 to 12, wherein the at least one processing module is further configured to determine whether the Internet protocol address is an unauthorized Internet protocol address to determine whether the packet information is abnormal.

14. The traffic control server (SVR) according to any one of claims 8 to 12, wherein the packet information comprises a number of times the user equipment (UE1, LTE2, LTE3) sending the packet (P1, P2, P3), and the at least one processing module is further configured to determine whether the number of times the user equipment (UE1, LTE2, LTE3) sending the packet (P1, P2, P3) reaches a warning number to determine whether the packet information is abnormal.
